# EUROPÄISCHE PATENTSCHRIFT

(11) **EP 1 621 273 B1**
(45) Veröffentlichungstag und Bekanntmachung des Hinweises auf die Patenterteilung: **22.10.2008**
(21) Anmeldenummer: 05405432.5
(22) Anmeldetag: 11.07.2005
(51) Int. Cl.: B23B 29/034

(54) **Ausdrehwerkzeug**
Boring tool
Outil pour aléser

(30) Priorität: 15.07.2004 CH 119404
(43) Veröffentlichungstag der Anmeldung: 01.02.2006
(73) Patentinhaber: Heinz Kaiser AG, 8153 Rümlang (CH)
(72) Erfinder: Kaiser, Heinz, 8304 Wallisellen (CH); Hänggi, Ernst, 8172 Niederglatt (CH); Stadelmann, Ralph, 8166 Niederweningen (CH)
(74) Vertreter: Groner, Manfred

(56) Entgegenhaltungen:
- WO-A-99/43459
- GB-A- 690 366
- US-A- 2 483 096

## Beschreibung

Die Erfindung betrifft ein Ausdrehwerkzeug nach dem Oberbegriff des Anspruchs 1.

Ausdrehwerkzeuge dieser Art sind beispielsweise als Zerspannwerkzeuge seit langem bekannt. Durch Verschwenken des Werkzeugträgers kann der Bearbeitungsdurchmesser verstellt werden.

Ausdrehwerkzeuge der genannten Art sind beispielsweise aus der US 1,493,051, der US 3,148,561, der CH 84483 und der WO 99/43459 bekannt geworden. Bei diesen ist das Werkzeug jeweils an einem hinteren Ende um eine radial verlaufende Schwenkachse in einem vergleichsweise kleinen Winkel verschwenkbar. Zum Verschwenken wird jeweils eine Schraube gelöst und eine andere nachgestellt. Beim Verstellen entsteht eine Unwucht, welche durch Auswuchtgewichte möglichst ausgeglichen werden muss. Ein solches Auswuchten ist vergleichsweise aufwändig. Das Verstellen ist zeitaufwändig und erfordert entsprechende Erfahrung.

Die GB 690 366 A offenbart ein Werkzeug zum Herstellen von bestimmten Formen, beispielsweise sechskantigen Ausnehmungen. Ein Ausdrehstrahl wird durch die Fliehkraft und durch den Druck einer Feder mit einem hinteren Ende auf einer Schablone angepresst. Der Ausdrehstrahl ist beim Ausschwenken beweglich und damit sehr labil. Das Werkzeug ist nur für tiefe Drehzahlen geeignet. Der Ausdrehdurchmesser ist vergleichsweise grob einstellbar.

Die US 2, 483,096 A offenbart ein Ausdrehwerkzeug, bei dem zum Verändern des Ausdrehdurchmessers der Ausdrehstrahl verschwenkbar und mit Konterschrauben fixierbar ist. Beim Verschwenken entsteht eine wesentliche statische Unwucht. Die Einstellung des Ausdrehdurchmessers erfolgt mit Konterschrauben und ist vergleichsweise ungenau und aufwendig.

Auch beim Ausdrehwerkzeug nach der WO 99/43459 wird der Ausdrehdurchmesser mit Konterschrauben eingestellt.

Der Erfindung liegt die Aufgabe zugrunde, ein Ausdrehwerkzeug der genannten Art zu schaffen, das die genannten Nachteile vermeidet.

Die Aufgabe ist bei einem gattungsgemässen Ausdrehwerkzeug gemäss Anspruch 1 gelöst. Der Drehpunkt befindet sich somit nicht am hinteren Ende des Werkzeugträgers wie bisher, sondern im Wesentlichen zwischen dem vorderen und dem hinteren Ende des stabförmigen Werkzeugträgers. Vorzugsweise befindet sich der Drehpunkt an der Mantelfläche des Werkzeuges.

Das Werkzeug ist an einem hinteren Ende mit einem verstellbaren Schlitten verbunden. Durch die radiale Verstellung des Schlittens ergibt sich entsprechend eine radiale Verlagerung von Masse. Der Drehpunkt ist nun vorzugsweise so angeordnet, dass bei der Verwendung vergleichsweise langer Werkzeuge die Massenverschiebung des Schlittens kompensiert wird durch das entsprechend verschwenkte Werkzeug. Der Drehpunkt ist in diesem Fall auch unter Einbeziehung der Masse des Schlittens unwuchtneutral.

Der Schlitten ist beispielsweise mit einer Mikrometerschraube einem Nonius oder dgl. radial feinverstellbar. Dies erlaubt eine sehr präzise und zudem einfache Einstellung des Durchmessers, wobei der Schlitten mit nur einem Bedienungsschlüssel verstellt werden kann. Die Genauigkeit der Mikrometerspindel kann noch zusätzlich durch das Anbringen eines Nonius verstärkt werden. Ein wesentlicher Vorteil der Erfindung erlaubt das präzise Feinverstellen ohne zusätzliche Hilfsmittel wie Einstelluhren oder dgl. Zum Beispiel kann eine vorbearbeitete Bohrung nach dem Messen mit einem Mikrometer oder dgl. um den geforderten Differenzbetrag äusserst präzise durch Drehen an der Mikrometerspindel verstellt werden. Der Schlitten kann mit einem einzelnen Werkzeug verstellt werden, wobei hier vorzugsweise eine Nonius-Skala verwendet wird. Ein präzise Einstellung ist von der Bedienungsperson auch ohne grosse Erfahrung möglich.

Nach einer Weiterbildung der Erfindung ist vorgesehen, dass der Schlitten eine Ausnehmung aufweist, in welche das hintere Ende des Werkzeuges hineinragt. Das Werkzeug wird beim Einsetzen in die Öffnung des Grundkörpers in diese Ausnehmung eingesetzt und damit positioniert.

Nach einer Weiterbildung der Erfindung ist vorgesehen, dass zur Fixierung des Werkzeuges ein Klemmteil vorgesehen ist, das gleichzeitig den Schlitten klemmt. Damit kann eine besonders hohe Stabilität erreicht werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird anhand der Zeichnung näher erläutert. Es zeigen:
- Figur 1: ein Längsschnitt durch ein erfindungsgemässes Ausdrehwerkzeug,
- Figur 2: ein weiterer Schnitt durch das erfindungsgemässe Ausdrehwerkzeug,
- Figur 3: ein vergrösserter Bereich des Ausdrehwerkzeuges,
- Figur 4: ein Schnitt durch das erfindungsgemässe Ausdrehwerkzeug, wobei das Werkzeug nicht dargestellt ist,
- Figur 5: ein weiterer Schnitt durch das Ausdrehwerkzeug, wobei hier ebenfalls das Werkzeug weggelassen ist,
- Figur 6: ein Querschnitt entlang der Linie VI-VI der Figur 4 und
- Figur 7: ein Querschnitt entland der Linie VII-VII der Figur 5.

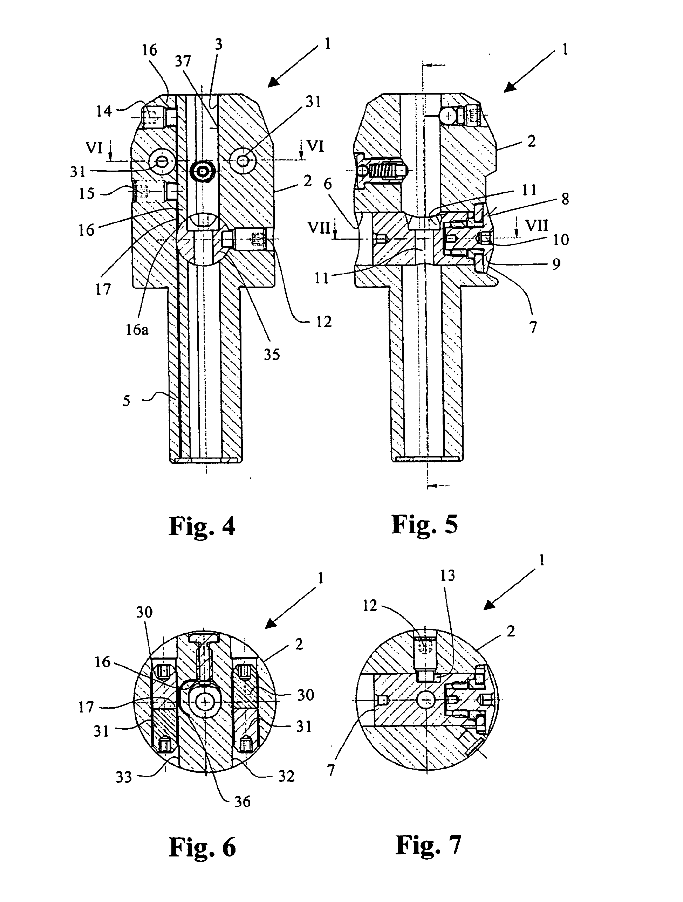

Das Ausdrehwerkzeug 1 besitzt einen im Wesentlichen zylindrischen Grundkörper 2, der einen Schaft 5 und eine Schulter 4 zum Anschluss an eine hier nicht gezeigte Spindel aufweist. Der Grundkörper 2 besitzt eine durchgehende Öffnung 3, in welcher die Achse A verläuft. In eine radial verlaufende Bohrung 6 ist ein Schlitten 7 eingesetzt, der präzise radial verstellbar ist. Die Verstellung erfolgt an einer Mikrometerschraube 9 oder anderen Einstellmitteln, die mit einer Skala 8, insbesondere einer Noniusskala versehen sind. Diese Mikrometerschraube 9 ist drehbar am Grundkörper 2 gelagert und mit einem Gewinde 34 mit dem Schlitten 7 verbunden. Beim Drehen der Mikrometerschraube 9 wird der Schlitten 7 radial verstellt, was aufgrund der genannten Skala sehr präzise erfolgen kann. Zum Drehen des Einstellteils 9 weist dieses ein Sechskantloch 10 auf, in welches ein hier nicht gezeigtes Werkzeug einsetzbar ist. Damit sich der Schlitten 7 nicht um seine eigene Achse dreht, ist in den Grundkörper 2 gemäss Fig. 4 ein Führungskörper 12 eingesetzt, der gemäss Fig. 7 in eine Nut 13 des Schlittens 7 eingreift.

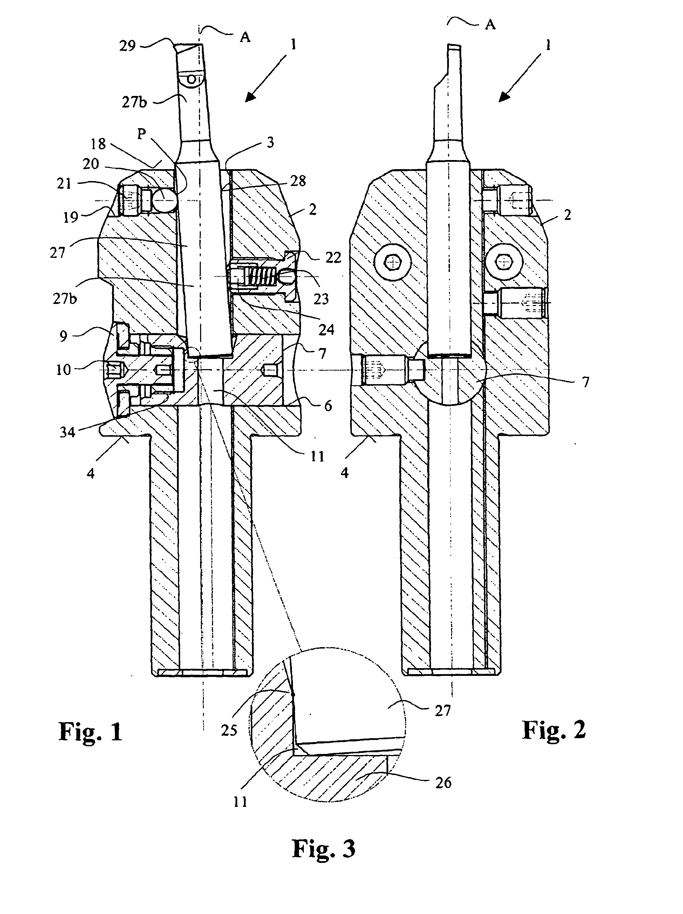

Der Schlitten 7 besitzt etwa mittig und oben eine im Wesentlichen konische Ausnehmung 11, in die ein Werkzeug 17 mit einem hinteren Ende eingreift. Diese Ausnehmung 11 besitzt gemäss Fig. 3 eine Kante 25, die bei eingesetztem Werkzeug 27 einen Abstand zu einer bodenseitigen Fläche 26 des Werkzeuges 27 aufweist. Die Ausnehmung 11 ist so ausgebildet, dass das Werkzeug 27 in dieser Ausnehmung schwenkbar ist.

Der Grundkörper 2 weist eine stirnseitige Fläche 18 auf, über welche das eingesetzte Werkzeug 27 hinausragt. In vergleichsweise kurzem Abstand zu dieser Fläche 18 ist eine Kugel 20 angeordnet, welche in eine radiale Bohrung 19 eingesetzt ist und die für das eingesetzte Werkzeug 27 einen unwuchtneutralen Drehpunkt P bildet. Die Kugel 20 wird mit einem Gewindestift 21 gehalten, die in die Bohrung 19 eingeschraubt ist. Die Kugel 20 ist dadurch radial fixiert. Der im Wesentlichen unwuchtneutrale Drehpunkt P teilt das Werkzeug 27 in einen vorderen Bereich 27b und in einen hinteren Bereich 27a. Der vordere Bereich 27b kann je nach Werkzeug 27 unterschiedlich lang sein. Jedenfalls ist an einem vorderen Ende eine Schneidkante 29 angeordnet, die in üblicher Weise durch eine hier nicht näher gezeigte auswechselbare Schneidplatte gebildet wird. Der Punkt P liegt im Wesentlichen etwa mittig zwischen der Fläche 26 und der Schneidkante 29. Bei vergleichsweise kurzen Werkzeugen 27 ist dann allerdings der Bereich 27b kürzer als der Bereich 27a. Bei besonders langen Werkzeugen 27 kann dies umgekehrt sein. Wie ersichtlich, liegt die Kugel 20 an der Mantelfläche 28 des Werkzeuges 27 an. Der Drehpunkt P wird damit entsprechend an der Mantelfläche 28 des Werkzeuges 27 gebildet.

Damit das Werkzeug 27 um den Punkt P verschwenkt werden kann, ist die Öffnung 3 im Querschnitt etwa oval ausgebildet, wie die Fig. 6 erkennen lässt. Der grössere Durchmesser der Öffnung 3 ist somit grösser als der Durchmesser des Bereiches 27a, welcher in die Öffnung 3 hineinragt. Die Fig. 1 zeigt das Werkzeug 27 in der einen möglichen maximalen Schwenkposition. Wird der Körper 25 in Fig. 1 durch Drehen des Einstellteils 9 nach links verschoben, so wandert die Schneidkante 29 nach rechts gegen die Achse A. Gleichzeitig wandert der Bereich 27a nach links. Da somit der Bereich 27b in Fig. 1 nach rechts und der Bereich 27a nach links wandert, ist eine solche Verschwenkung im Wesentlichen unwuchtneutral. Ist das Werkzeug 27 länger als in Fig. 1 gezeigt, so wird zudem die Masse des Schlittens 7 ausgeglichen. Ist eine Feinauswuchtung erforderlich so kann dies durch Verschieben von Gewichtskörpern 30 und 31 erfolgen, die gemäss Fig. 6 in parallelen und radial verlaufenden Gewindebohrungen 32 und 33 gelagert sind. Diese paarweise angeordneten Gewichtkörper 30 und 31 sind gekontert, so dass sie in einer einmal eingestellten Position fixiert sind.

Zur Fixierung der eingestellten Schwenkposition des Werkzeuges 27 ist ein Klemmteil 16 vorgesehen, der sich gemäss Fig. 2 im Wesentlichen über den gesamten Bereich 27a des Werkzeuges 27 erstreckt. Das Werkzeug 27 wird somit im Wesentlichen im gesamten Bereich geklemmt, der in der Öffnung 3 liegt. Der Klemmteil 16 ist aus dem Grundkörper 2 durch Funkenerosion hergestellt, indem in den Grundkörper 2 von der Öffnung 3 her die in Fig. 6 gezeigte Trennlinie 17 gebildet wird. Die Schnittlinie 17 ist gemäss Fig. 6 so ausgebildet, dass der Klemmteil 16 in einem Bereich 36 mit dem Grundkörper 2 verbunden bleibt. Der sich über die gesamte Länge des Klemmteils 16 erstreckende Bereich 36 bildet damit eine Art Scharnier. Die Klemmung des Werkzeuges 27 erfolgt mit zwei im Abstand zueinander angeordneten Klemmschrauben 14 und 15, welche in Fig. 4 gezeigt sind. Eine erste Klemmschraube 14 ist in vergleichsweise kurzem Abstand zur Frontseite 18 und eine zweite Klemmschraube 15 wesentlich näher beim Schlitten 7 angeordnet. Durch Eindrehen der beiden Klemmschrauben 14 und 15 wird der Klemmteil 16 an einer gegenüberliegenden Fläche 37 des Grundkörpers 2 angepresst. Gleichzeitig wird der Klemmteil 16 mit einem unteren Ende 16a an den Körper 35 angepresst. Dieser Körper 35 wird durch diese Klemmung zusätzlich fixiert. Ist das Werkzeug 27 fixiert bzw. im Körper 2 geklemmt, so ist gleichzeitig auch der Körper 35 geklemmt. Das Werkzeug 27 ist damit über den gesamten Bereich 27a geklemmt und zusätzlich mit seinem hinteren Ende in der Ausnehmung 11 festgelegt. Dies ergibt eine besonders hohe Stabilität.

Damit das Werkzeug 27 beim Einstellen der Schwenkposition an der Kugel 20 anliegt, ist in den Grundkörper 2 gegenüberliegend und zum Schlitten 7 hin versetzt eine Schraube 22 angeordnet, in welcher an einem vorderen Ende ein Stift 24 gelagert ist, welcher unter der Wirkung einer Feder 23 am Werkzeug 27 anliegt.

### Bezugszeichenliste

- 1: Ausdrehwerkzeug
- 2: Grundkörper
- 3: Öffnung
- 4: Schulter
- 5: Schaft
- 6: Bohrung
- 7: Schlitten
- 8: Skala (Nonius)
- 9: Mikrometerschraube
- 10: Sechskantloch
- 11: Ausnehmung
- 12: Führungskörper
- 13: Nut
- 14: erste Klemmschraube
- 15: zweite Klemmschraube
- 16: Klemmteil
- 16a: unteres Ende
- 17: Schnittlinie
- 18: Frontseite
- 19: Bohrung
- 20: Kugel
- 21: Gewindestif
- 22: Schraube
- 23: Feder
- 24: Stift
- 25: Kante
- 26: Fläche
- 27: Werkzeug
- 27a: hinterer Bereich
- 27b: vorderer Bereich
- 28: Mantelfläche
- 29: Schneide
- 30: Gewichtskörper
- 31: Gewichtskörper
- 32: Bohrung
- 33: Bohrung
- 34: Gewinde

- 36: Bereich
- 37: Fläche
- A: Achse
- P: Drehpunkt

## Patentansprüche

1. Ausdrehwerkzeug mit einem Grundkörper (2), in dem ein Werkzeug (27) angeordnet ist, das an einem vorderen Ende (27b) eine Schneide (29) aufweist, mit einer im Grundkörper (2) angeordneten Öffnung (3), in welcher das Werkzeug (27) schwenkbar gelagert ist, mit Einstellmitteln (7) zum Einstellen der Schwenkposition des Werkzeuges (27) relativ zu dem um eine Rotationsachse (A) drehbaren Grundkörper (2) und mit Mitteln (16) zum Fixieren des Werkzeuges (27) in der eingestellten Schwenkposition, **dadurch gekennzeichnet, dass** das Werkzeug (27) um einen Drehpunkt (P) schwenkbar ist, der das Werkzeug (27) in einen vorderen Bereich (27b) und einen hinteren Bereich (27a) so teilt, dass ein Verschwenken des Werkzeugs (27) um diesen Drehpunkt (P) bezüglich der Rotationsachse (A) des Werkzeugs (28) im Wesentlichen unwuchtneutral ist, wobei das Werkzeug (27) an einem hinteren Ende (27a) mit einem radial verstellbaren Schlitten (7) verbunden ist, der beispielsweise anhand einer Mikrometerschraube (9) radial feinverstellbar ist.

2. Ausdrehwerkzeug nach Anspruch 1, **dadurch gekennzeichnet, dass** der Schlitten (7) eine Ausnehmung (11) aufweist, in welche ein hinteres Ende des Werkzeuges (27) hineinragt.

3. Ausdrehwerkzeug nach einem der Ansprüche 1 oder 2, **dadurch gekennzeichnet, dass** der Drehpunkt (P) zu einer Frontseite (18) des Grundkörpers (2) einen wesentlich kleineren Abstand aufweist als zu einer bodenseitigen Fläche (26) des eingesetzten Werkzeuges (27).

4. Ausdrehwerkzeug nach einem der Ansprüche 1 bis 3, **dadurch gekennzeichnet, dass** der im Wesentlichen unwuchtneutrale Drehpunkt (P) durch ein Teil (20) gebildet wird, welches in die genannte Öffnung (3) hineinragt.

5. Ausdrehwerkzeug nach Anspruch 4, **dadurch gekennzeichnet, dass** das Teil (20) eine Kugel ist.

6. Ausdrehwerkzeug nach einem der Ansprüche 1 bis 5, **dadurch gekennzeichnet, dass** das Werkzeug (27) mit einem radial verstellbaren Klemmteil (16) fixierbar ist, wobei sich dieser Klemmteil (16) im Wesentlichen über die ganze Tiefe der Öffnung (3) erstreckt.

7. Ausdrehwerkzeug nach Anspruch 6, **dadurch gekennzeichnet, dass** mit dem Klemmteil (16) gleichzeitig ein Schlitten (7) klemmbar ist, der mit dem hinteren Ende des Werkzeuges (27) verbunden ist.

8. Ausdrehwerkzeug nach einem der Ansprüche 1 bis 7, **dadurch gekennzeichnet, dass** in den Grundkörper (2) ein Teil (24) gelagert ist, welcher das Werkzeug (27) federnd am genannten Drehpunkt (P) anpresst.

9. Ausdrehwerkzeug nach einem der Ansprüche 1 bis 8, **dadurch gekennzeichnet, dass** der Drehpunkt (P) an der Mantelfläche (28) des Werkzeuges (27) gebildet wird.

## Claims

1. A boring tool having a basic body (2) in which a tool bit (27) is arranged which has a cutting edge (29) at a front end (27b), having an opening (3) which is arranged in the basic body (2) and in which the tool bit (27) is pivotably mounted, having setting means (7) for setting a fixed pivoted position of the tool bit (27) relative to the basic body (2), which is rotatable about an axis (A), and having means (16) for fixing the tool bit (27) in the set pivoted position, **characterized in that** the tool bit (27) is pivotable about a pivot point (P) which divides the tool bit (27) into a front region (27b) and a rear region (27a), such that pivoting the tool bit (27) about this pivot point (P), which is in respect of the axis (A) of the tool bit (27) essentially neutral in terms of unbalance, wherein the tool bit (27) is connected at a rear end (27a) to a radially adjustable slide (7), which can be finely adjusted radially, for example with the aid of a micrometer screw (9).

2. The boring tool as claimed in claim 1, **characterized in that** the slide (7) has a recess (11), into which a rear end of the tool bit (27) projects.

3. The boring tool as claimed in claim 1 or 2, **characterized in that** the pivot point (P) is at a substantially smaller distance from a front side (18) of the basic body (2) than from a bottom surface (26) of the inserted tool bit (27).

4. The boring tool as claimed in anyone of the claims 1 to 3, **characterized in that** the pivot point (P), which is essentially neutral in terms of unbalance, is formed by a part (20) which projects into said opening (3).

5. The boring tool as claimed in claim 4, **characterized in that** the part (20) is a ball.

6. The boring tool as claimed in anyone of the claims 1 to 5, **characterized in that** the tool bit (27) can be fixed by a radially adjustable clamping part (16), this clamping part (16) extending essentially over the entire depth of the opening (3).

7. The boring tool as claimed in claim 6, **characterized in that** the slide (7), which is connected to the rear end of the tool bit (27), can be clamped at the same time by the clamping part (16).

8. The boring tool as claimed in anyone of the claims 1 to 7, **characterized in that** a part (24) which presses the tool bit (27) against said pivot point (P) in a spring-loaded manner is mounted in the basic body (2).

9. The boring tool as claimed in anyone of the claims 1 to 8, **characterized in that** the pivot point (P) is formed at the lateral surface (28) of the tool bit (27).

## Revendications

1. Outil d'alésage comprenant un corps de base (2), dans lequel est disposé un outil (27) qui présente à une extrémité avant (27b) une arête de coupe (29) avec une ouverture (3) disposée dans le corps de base (2), dans laquelle l'outil (27) est monté de manière à pouvoir pivoter, comprenant des moyens d'ajustage (7) pour ajuster la position de pivotement de l'outil (27) par rapport au corps de base (2) pouvant tourner autour d'un axe de rotation (A) et comprenant des moyens (16) pour fixer l'outil (27) dans la position de pivotement ajustée, **caractérisé en ce que** l'outil (27) peut pivoter autour d'un pivot (P), qui divise l'outil (27) en une région avant (27b) et en une région arrière (27a) de telle sorte qu'un pivotement de l'outil (27) autour de ce pivot (P) par rapport à l'axe de rotation (A) de l'outil (27) soit sensiblement neutre en termes de déséquilibre, l'outil (27) étant connecté à une extrémité arrière (27a) à un chariot (7) déplaçable radialement, qui peut être ajusté avec précision radialement par exemple à l'aide d'une vis micrométrique (9).

2. Outil d'alésage selon la revendication 1, **caractérisé en ce que** le chariot (7) présente un évidement (11) dans lequel pénètre une extrémité arrière de l'outil (27).

3. Outil d'alésage selon l'une quelconque des revendications 1 ou 2, **caractérisé en ce que** le pivot (P) présente par rapport à un côté frontal (18) du corps de base (2) un espacement sensiblement plus petit que par rapport à une surface (26) du côté du sol, de l'outil utilisé (27).

4. Outil d'alésage selon l'une quelconque des revendications 1 à 3, **caractérisé en ce que** le pivot (P) essentiellement neutre en termes de déséquilibre est formé par une pièce (20) qui pénètre dans ladite ouverture (3).

5. Outil d'alésage selon la revendication 4, **caractérisé en ce que** la pièce (20) est une bille.

6. Outil d'alésage selon l'une quelconque des revendications 1 à 5, **caractérisé en ce que** l'outil (27) peut être fixé avec une pièce de serrage (16) déplaçable radialement, cette pièce de serrage (16) s'étendant essentiellement sur toute la profondeur de l'ouverture (3).

7. Outil d'alésage selon la revendication 6, **caractérisé en ce qu'**un chariot (7) qui est connecté à l'extrémité arrière de l'outil (27) peut être serré simultanément à la pièce de serrage (16).

8. Outil d'alésage selon l'une quelconque des revendications 1 à 7, **caractérisé en ce qu'**une pièce (24) est montée dans le corps de base (2), laquelle presse l'outil (27) élastiquement contre ledit pivot (P).

9. Outil d'alésage selon l'une quelconque des revendications 1 à 8, **caractérisé en ce que** le pivot (P) est formé sur la surface d'enveloppe (28) de l'outil (27).
